## Europäisches Patentamt

## European Patent Office

## Office européen des brevets

(11) Veröffentlichungsnummer: **0 281 517**
A2

# EUROPÄISCHE PATENTANMELDUNG

(21) Anmeldenummer: 88810108.6

(22) Anmeldetag: 22.02.88

(51) Int. Cl.⁴: **A 01 K 13/00**
A 46 B 11/00, A 01 N 25/00

(30) Priorität: 27.02.87 CH 753/87

(43) Veröffentlichungstag der Anmeldung:
07.09.88 Patentblatt 88/36

(84) Benannte Vertragsstaaten:
AT BE CH DE ES FR GB GR IT LI LU NL SE

(71) Anmelder: CIBA-GEIGY AG
Klybeckstrasse 141
CH-4002 Basel (CH)

(72) Erfinder: Metzner, Helmut
Im Jürtli 9
CH-4148 Pfeffingen (CH)

Marshall, Alan Barry
Bleichestrasse 7
CH-4058 Basel (CH)

(54) Vorrichtung zur Applikation von Wirkstoffen.

(57) Es wird die Herstellung und Verwendung einer Applikationsvorrichtung für die Uebertragung von insektiziden oder akariziden Wirkstoffen auf die Oberfläche von Tieren zur Bekämpfung von Insekten und Akariden auf dem Haarkleid der Tiere und zur Vorbeugung gegen Schädlingsbefall beschrieben, die sich durch eine optische Anzeige des Wirkstoffverbrauchs auszeichnet.

EP 0 281 517 A2

0 281 517

**Beschreibung**

Vorrichtung zur Applikation von Wirkstoffen

Die vorliegende Erfindung betrifft eine Applikationsvorrichtung zur Uebertragung von insektiziden oder akariziden Wirkstoffen auf das Fell bzw. die Haut von Säugetieren. Es handelt sich dabei um ein kamm-, bürsten- oder striegelartiges Instrument, mit Hilfe dessen die Wirkstoffe zur Bekämpfung von Insekten und/oder Akariden auf das Haarkleid und die darunterliegenden Hautbereiche der Tiere appliziert werden, das sich dadurch auszeichnet, dass der Verbrauch des Wirkstoffs optisch angezeigt wird.

Nicht nur in freier Wildbahn lebende Tiere, sondern auch Haus- und Nutztiere sind der Gefahr ausgesetzt, von Ektoparasiten befallen zu werden. Die vor allem im Haarkleid (Fell) der Tiere sich einnistenden Parasiten können die Gesundheit der befallenen Tiere durch Irritationen der Haut sowie durch Uebertragung von Infektionskrankheiten nachhaltig schädigen. Zu den in erster Linie in Frage kommenden Ektoparasiten zählen beispielsweise beissende Fliegen, Läuse, Flöhe und andere beissende uns saugende Insekten sowie Akariden, wie Milben, insbesondere Zecken.

Die heutzutage zur Bekämpfung von Ektoparasiten eingesetzten Pestizide können je nach Gegebenheit in verschiedener Weise angewendet werden.

Grosstiere, wie Rinder, Pferde oder Schafe werden im allgemeinen durch Tauchen, Begiessen oder Besprühen mit wirkstoffhaltigen Lösungen behandelt. Diese Verfahren sind jedoch aus wirtschaftlichen und technischen Gründen für kleinere Haus- und Nutztiere, wie beispielsweise Hunde, Katzen, Meerschweinchen, Hamster oder Ziegen weniger geeignet. Desgleichen ist ihr Einsatz bei der Behandlung von einzelnen Grosstieren technisch zu aufwendig und kostspielig.

Zur Vermeidung der Nachteile der vorgenannten Verfahren, vor allem zur Verringerung des technischen Aufwandes, sind bereits Applikationsvorrichtungen zur manuellen Anwendung vorgeschlagen worden, mit welchen pestizide Wirkstoffe auf das Haarkleid der behandelten Tiere übertragen werden sollen.

So beschreibt die U.S. Patentschrift Nr. 4,143,982 eine Bürste mit perforiertem Hohlkörper, der insektizides Pulver enthält, das bei Gebrauch auf das bestrichene Fell dosiert werden soll. Ferner werden in der Europäischen Patentschirft Nr. 122 605 eine Bürste und ein Kamm offenbart, die aus einem polymeren Material bestehen, das als Bestandteil insektizide Wirkstoffe enthält, die bei Anwendung freigesetzt und auf das Fell des behandelten Tieres übertragen werden sollen. Die Japanische Offenlegungsschrift JP-A-59 187 722 (EARTH SEIYAKU K.K.) beschreibt eine Bürste zur Bekämpfung von Schadinsekten an Tieren, die 0,1 bis 95 % einer insektizid wirksamen Substanz und 5 bis 99,9 % einer wachsartigen oder flüssigen Substanz als Träger enthält. Mit den vorgeschlagenen bekannten Vorrichtungen ist jedoch bisher keine dem vorliegenden Bedürfnis angemessene, vollauf befriedigende Lösung des Problems der Bekämpfung von Ektoparasiten auf der Oberfläche von Felltieren möglich, insbesondere deshalb nicht, weil der Benutzer, im Falle von Haustieren der Haustierhalter, im allgemeinen ein Laie auf dem Gebiet der Parasitenbekämpfung ist und meistens nicht erkennen kann, wann Tierkamm, Tierstriegel, Tierbürste oder entsprechende Vorrichtungen verbraucht sind, d.h. nicht mehr ausreichend Wirkstoff für eine erfolgreiche Weiterbekämpfung der Parasiten enthält. So kommt es, dass derartige Vorrichtungen, insbesondere durch den Laien, zu lange eingesetzt werden, obwohl sie mittlerweile völlig nutzlos geworden sind. Die überlebenden oder neu aufgenommenen Parasiten bilden wieder Populationen und breiten sich erneut aus. Dadurch werden die an sich sehr wirkungsvollen Vorrichtungen scheinbar unbrauchbar. Der Verbraucher hält sie für ungeeignet und versucht es oft mit drastischeren, für Tier und Mensch weniger zuträglichen Methoden.

Mit dem Gegenstand der vorliegenden Erfindung wird nunmehr eine Vorrichtung bereitgestellt, deren Anwendung in der Tierbehandlung und -pflege selbst dem absoluten Laien eine erfolgversprechende Bekämpfung von parasitären Insekten und Akariden auf der Oberfläche von Tieren, wie dem Fell und den darunterliegenden Hautpartien, erlaubt. Der Erfindungsgegenstand ist eine manuell anwendbare Applikationsvorrichtung z.B. in Form eines Kamms, einer Bürste oder eines Striegels. Diese Vorrichtungen bestehen aus hartem oder elastischen Material. Sie sind mit einer insektizid- oder akarizidwirksamen Masse beschichtet oder überzogen. Beim Kämmen, Bürsten oder Striegeln des Fells wird soviel Wirkstoff-haltige Masse auf die Oberfläche des Tieres abgegeben, dass dieses nachhaltig von den parasitären Insekten oder Akariden befreit und darüber hinaus für einen längeren Zeitraum gegen erneuten Parasitenbefall geschützt ist. Das Besondere an dieser Applikationsvorrichtung ist jedoch ihre optische Verbrauchsanzeige, die dadurch zustande kommt, dass man die den Wirkstoff enthaltende Beschichtung so auswählt, dass diese sich deutlich vom Material der Zähne, Borsten oder Noppen unterscheidet. Gleiten nun beim Gebrauch die besagten Zähne, Borsten oder Noppen durch das Fell des Tieres, so wird mit zunehmendem Gebrauch die Beschichtung mit dem Wirkstoff abgestreift und das sich deutlich unterscheidende, unbeschichtete Material des Kamms, der Bürste bzw. des Striegels erkennbar, so dass jedermann, auch ein Laie, auf einen Blick feststellen kann, dass die Vorrichtung verbraucht ist und gegebenenfalls durch eine neue zu ersetzen ist. Durch entsprechende Wahl der Wirkstoffkonzentration in der Beschichtungsmasse und der auf den Träger aufgebrachten Menge an Beschichtungsmasse lassen sich beispielsweise die optimale Anzahl von Striegelstrichen und die Dauer der Wirksamkeit gut den jeweiligen Gegebenheiten anpassen, so dass beispielsweise nur wenige Striegelstriche genügen, um das Absterben einer Flohpopulation und die Verhinderung einer Reinfestation über einen gewünschten Zeitraum zu gewährleisten. Ferner kann durch die Wahl der entsprechenden Parameter auch eine unnötig hohe Dosierung des Wirkstoffs, wie sie insbesondere von unerfahrenen Personen leicht

2

verabfolgt wird, vermieden werden.

Die vorliegende Erfindung betrifft somit eine Vorrichtung mit zahn-, borsten- oder noppenartigen Erhebungen zur Applikation eines ektoparasitiziden Wirkstoffs auf Haus- oder Nutztiere, dadurch gekennzeichnet, dass die Zähne, Borsten oder Noppen dieser Vorrichtung ganz oder teilweise mit einer den Wirkstoff enthaltenen Beschichtungsmasse beschichtet sind, die beim Kämmen, Bürsten oder Striegeln des Tieres auf dessen Haarkleid und Haut übertragen wird und die sich optisch deutlich vom Material der Zähne, Borsten oder Noppen unterscheidet, sowie ferner ein Verfahren zur Herstellung solcher Vorrichtungen, welches darin besteht, dass man die Zähne, Borsten oder Noppen besagter Vorrichtung mit der den Wirkstoffe enthaltenden Masse beschichtet.

Dabei kann die deutliche Unterscheidbarkeit auf einem Farbunterschied zwischen Beschichtung und Trägermaterial beruhen, die sich gegebenenfalls durch Zusatz eines farbgebenden Materials, beispielsweise eines Farbstoffes, zur Beschichtungsmasse oder zum Trägermaterial erreichen lässt.

Ein bevorzugter Gegenstand der vorliegenden Erfindung ist somit eine Vorrichtung, die sich dadurch auszeichnet, dass das Material der Zähne, Borsten oder Noppen und die den Wirkstoff enthaltende Beschichtungsmasse unterscheidbare Farben aufweisen.

Ein weiterer bevorzugter Gegenstand ist eine Vorrichtung, die sich dadurch auszeichnet, dass die den Wirkstoff enthaltenden Beschichtungsmasse eine farbgebende Substanz enthält, die sich von der Farbe der Zähne, Borsten oder Noppen unterscheidet und ein Farbstoff oder ein Pigment ist, oder dass die Zähne, Borsten oder Noppen einen zusätzlichen Farbstoff enthalten, der beide Teile, nämlich Beschichtung einerseits und Zähne, Borsten doer Noppen andererseits, deutlich unterscheidbar macht.

Als deutlich unterscheidbar sollen im Rahmen der vorliegenden Erfindung kräftige Farbdifferenzen, wie beispielsweise schwarz/weiss; rot/grün; blau/gelb; rot/weiss; blau/weiss; braun/gelb sowie Komplementärben verstanden werden. Es kommen alle Unterschiede in Frage, die durch blosses Ansehen den Verbrauch des Wirkstoffs signalisieren.

Dies wird z.B. dadurch erreicht, dass man dem Beschichtungs-, dem Trägermaterial oder beiden Materialien farbgebende Substanzen wie Farbstoffe oder Pigmente zusetzt, welche für Warmblüter unbedenklich sind. Natürlich kann auch von vornherein ein Beschichtungsmaterial ausgewählt werden, das eine Eigenfarbe, z.B. Braun, aufweist, die sich vom Trägermaterial, z.B. weissem Kunststoff, unterscheidet, sodass ein spezieller Farbstoffzusatz entfällt.

Die zur Durchführung der Erfindung verwendeten Vorrichtungen wie Kamm, Bürste und Striegel können aus Materialien natürlichen oder synthetischen Ursprungs hergestellt sein, beispielsweise aus Holz, Metall, Gummi, Schildpatt, Horn, thermo-plastischen Kunststoffen sowie aus Duroplasten, Elastomeren, Polyolefinen (z.B. Polyethylen, Polypropylen oder Copolymere von Ethylen und Propylen), Polyacrylaten (z.B. Polymere oder Copolymere von Methylacrylat, Ethylacrylat, Methylmethacrylat oder Ethylmethacrylat), Polymeren von Vinylverbindungen (z.B. Polystyren oder Polyvinylchlorid), Polyamiden, vulkanisierten Polyisoprenen oder Polybutadienen, ferner Harnstoff-Formaldehyd-Harzen, Melamin-Formaldehyd-Harzen, Epoxid-Harzen, Cellulose-Plastik-Verbindungen (z.B. Celluloseacetat, Cellulosebutyrat oder Cellulosenitrat) oder Polyurethan.

Die Wahl des Materials ist abhängig sowohl von der zu verwendenden Wirkstoff-enthaltenden Beschichtungsmasse als auch von der Art ihres Trägers (Kamm, Bürste, Striegel), der je nach Art eine längliche, runde, ovale oder rechteckige Form aufweisen kann und eine oder mehrere Reihen von Erhebungen wie Zähne, Borsten oder Noppen besitzt. Die Körper, welche die Zähne, Borsten und Noppen tragen, können mit einem Handgriff ausgerüstet sein, sind jedoc auch ohne diesen verwendbar. Ihre Formen entsprechen im übrigen den entsprechenden handelsüblichen, in der Praxis zum Kämmen, Bürsten oder Striegeln verwendeten Artikeln.

Als Formulierungshilfsstoffe, welche der Einbettung und Haftung der Wirkstoffe dienen und einen Teil der Beschichtungsmasse darstellen, mit denen die jeweiligen Applikationsvorrichtungen (Kamm, Bürste, Striegel) beschichtet werden, sollen physiologisch verträglich sein und sind Wachse oder wachsartige Substanzen, ferner feste oder flüssige Fette oder fettartige Substanzen und Bindemittel. Feste bzw. kristalline Wirkstoffe verlangen eher weiche und/oder flüssige Hilfsstoffe, während flüssige oder pastöse Wirkstoffe dagegen eher feste, harte Hilfsstoffe benötigen.

Als Formulierungshilfsstoffe für die Beschichtungsmasse werden sowohl einzelne dieser Stoffe als auch Gemische davon verwendet. Dazu zählen beispielsweise:
natürliche vorkommende oder synthetische Esterwachse, deren verschiedene Fraktionen und Derivate wie beispielsweise Bienenwachs, Candelillawachs, Carnaubawachs, Wollwachs, Wollwachsalkohole, Ester von Montansäure, Stearinsäureethylenglycolester oder Stearinsäurepentaerythritester und andere;
Fette und fettartige Stoffe wie Triglyceride höherer Fettsäuren oder höhere Fettsäuren und Fettalkohole. Als Beispiele sind zu nennen: Erdnussöl, hydriertes Erdnussöl, Kakaobutter, Maisöl, Palmöl, hydriertes Ricinusöl, Stearin, Tristearat oder expoxidiertes Sojaöl;
paraffinische und insbesondere isoparaffinische wachsartige Stoffe wie z.B. Ozokerite oder mikrokristalline Wachse mit einem Schmelzbereich von 50-105°C;
Polymerwachse wie z.B. Polyethylenwachse, Ethylenvinylacetat-Mischpolymeriste mit einem Schmelz-bzw. Erweichungspunkt von 80 - 130°C;
Chlorparaffine mit einem Gehalt an 40-73 Gew.-% Chlor.

Besonders erwähnenswert sind mikrokristallines Wachs, Carnaubawachs, Bienenwachs, Erdnussöl oder Gemische dieser Substanzen.

Falls erwünscht, kann die Beschichtungsmasse mit einer farbgebenden Substanz, welche ein Farbstoff oder ein Pigment ist, angefärbt sein, so dass während des Gebrauchs der Applikationsvorrichtung das Vorhandensein der wirksamen Beschichtung jederzeit kontrollierbar ist. Bei Verschwinden des Farbeffektes ist die insektizide oder akarizide Wirkung des Applikators erschöpft.

Für diesen Zweck geeignete Farbstoffe oder Pigmente sind z.B. folgende: Solvent Red 24 (C.I.26105), Solvent Blue 35 (C.I.61554) oder Irgalithgelb 2GP (C.I Pigment Gelb 17).

Wirkstoffe, welche die aktive Komponente der Beschichtungsmasse für die Durchführung der Erfindung darstellen, sind Insektizide und Akarizide, beispielsweise solche wie die natürlichen Pyrethrine, Pyrethroide, Chlorkohlenwasserstoffe, Carbamate, Phosphorsäureester. Thiocyansäureester, Nitrophenolderivate, Isonitrile, Diamide, Amidine, Triazinderivate, Phenylhydrazonpyrrolidinderivate, Phenylimidazolinderivate oder Phenylbenzoylharnstoffe.

Die vorgenannten Verbindungsgruppen umfassen lediglich eine Auswahl an einsetzbaren Wirkstoffen. stellen also keine Begrenzung in bezug auf ihre Verwendung zur Durchführung der vorliegenden Erfindung dar. Darüber hinaus können weitere Wirkstoffe soweit sie über die geeigneten insektiziden und/oder akariziden Eigenschaften verfügen, erfindungsgemäss als Aktivkomponente in der Beschichtungsmasse verwendet werden.

Als Einzelwirkstoffe sind beispielsweise zu nennen: Pyrethrumextrakt, Cypermethrin, Permethrin, Deltamethrin, Dioxacarb, Propoxur, Chlorpyrifos, Diazinon, Azamethiphos, Jodfenphos, Malathion, Phosmet, Cymiazole, Amitraz, Methoxychlor und Cyromazine. Besonders erwähnenswert sind Cypermethrin, Diazinon und Jodfenphos.

Für synergistische Gemische sind insbesondere die Pyrethroide geeignet, wobei als Synergist z.B. Piperonylbutoxyd in Frage kommt.

Die Herstellung der Beschichtungsmasse erfolgt durch Vermischen, Verreiben und Verteilen der Komponenten unter Rühren bei gleichzeitigem Erwärmen bis zur Bildung einer flüssigen homogenen Masse, wobei die Wirkstoffe in die Masse eingearbeitet werden bis sie darin homogen verteilt oder gelöst sind. Nach Abschluss des Homogenisierungsprozesses liegt der Tropfpunkt der Beschichtungsmasse bei 50° bis 120°C, vorzugsweise 60° bis 90°C. Die erkaltete verfestigte Masse besitzt eine Härte ausgedrückt in der Penetrometerzahl (Nadelpenetration nach DIN 51579) von 15 bis 220. Ihr Gehalt an Wirkstoff beträgt erfindungsgemäss 5 bis 98 Gew.-%, bevorzugt 50 bis 98 Gew.-%.

Zur Beschichtung der Applikationsvorrichtung (Kamm, Bürste, Striegel) wird die feste insektizide und/oder akarizide Masse durch Erwärmen in den flüssigen Zustand überführt. Dann wird das betreffende Gerät mit dem Teil, der beim Bestreichen des Tierfells mit diesem in innigen Kontakt kommt, in die flüssige Masse getaucht, nach kurzer Verweilzeit herausgezogen, abtropfen gelassen und das Erstarren der Beschichtungsmasse abgewartet. Anschliessend wird das fertig beschichtete Gerät zur endgültigen Verfestigung der aufgezogenen Schicht für einige Zeit bei Raumtemperatur aufbewahrt. Durch Variierung der Temperatur der geschmolzenen Beschichtungsmasse, der Eintauchdauer und der Eintauchtiefe des zu beschichtenden Gerätes kann die Menge der darauf aufgezogenen Beschichtungsmasse reguliert werden.

Bei der Anwendung der erfindungsgemässen Applikationsvorrichtung (Kamm, Bürste, Striegel mit Wirkstoff enthaltender Beschichtung) wird durch Bestreichen des Haarkleides des zu behandelnden Tieres mit dieser Vorrichtung ein Teil der Beschichtungsmasse zusammen mit den darin enthaltenen Wirkstoffen auf die Oberfläche des Tieres übertragen. Dieser Vorgang kann mehrmals wiederholt werden bis die Beschichtungsmasse aufgebraucht ist, so dass auch mehrere Tiere mit einer Beschichtung behandelt werden können. Die übertragenen Wirkstoffe entfalten dann auf und im Tierfell sowie auf den darunterliegenden Hautpartien ihre insektizide und/oder akarizide Wirksamkeit.

Es wurde nun festgestellt, dass sich die erfindungsgemässe Applikationsvorrichtung überraschenderweise hervorragend mit nachhaltigem Erfolg zur Bekämpfung von Ektoparasiten, die auf dem Haarkleid von Tieren parasitieren, eignet. Dazu zählen insbesondere Vertreter der Ordnungen Siphonaptera (z.B. blutsaugende Flöhe), Phthiraptera (z.B. blutsaugende Läuse), und Acarina (z.B. Vertreter der Unterordnungen Ixodidae, z.B. Zecken, und der Gattung Sarcoptes, z.B. Räudemilben, sowie als Tierparasiten auftretende Arten der Ordnung Diptera. Aus dieser Ordnung sind beispielsweise Vertreter der Gattung Stomoxys zu nennen (beispielsweise Stechfliegen).

Als Ektoparasiten von Haus- und Nutztieren, bei deren Bekämpfung die erfindungsgemässe Vorrichtung mit besonders gutem Erfolg verwendet werden kann, sind also in erster Linie Flöhe, Läuse, Zecken, Milben und Fliegen zu nennen.

Ein besonderer Vorteil der vorliegenden Erfindung liegt darin, dass durch die Behandlung neben der kurativen Wirkung, d.h., der Abtötung auf den Tieren bereits vorhandener Parasiten auch eine prophylaktische Wirkung gegen erneuten Parasitenbefall erzielt wird, wobei die Dauer der Schutzwirkung im wesentlichen von der Art und der Konzentration des Wirkstoffs und der Beschaffenheit der zu behandelnden Oberfläche des Tieres abhängt. Durch die Behandlung der Tiere, welche ebenfalls einen Gegenstand der vorliegenden Erfindung darstellt, tritt eine Repellent- und Detaching-Wirkung gegenüber infestierenden Parasiten ein, wodurch die behandelten Tiere keinerlei Belästigung durch die Parasiten erleiden. Damit werden die so behandelten Tiere nicht nur gegen gesundheitsschädliche Irritationen, sondern auch gegen die Uebertragung von Infektionskrankheiten durch die Parasiten geschützt.

Die Zusammensetzung der zur Durchführung der Erfindung verwendeten Beschichtungskompositionen ist vorteilhafterweise so gehalten, dass bei Anwendung der erfindungsgemässen Applikationsvorrichtung neben der Entfaltung der gewünschten ektoparasitiziden Wirkung auf dem Tier keine Beeinträchtigung der natürlichen ästhetischen Eigenschaften des gesunden, gepflegten Fells, wie Glanz und Griff, eintritt und somit das äussere Erscheinungsbild des Tieres während der Behandlung nicht nachteilig verändert wird. Bei entsprechender Auswahl geeigneter Hilfskomponenten kann sogar ein zusätzlicher Pflegeeffekt auf dem Haarkleid erzeilt werden.

Mit der der Erfindung zugrundeliegenden Vorrichtung kann somit auf leicht zu handhabende und kostensparende Weise durch direkte Bekämpfung der Ektoparasiten auf dem Haarkleid die Gesunderhaltung und Pflege von Felltieren durchgeführt werden, ohne Nachteile in Kauf nehmen zu müssen wie sie bei der ektoparasitiziden Ganzkörperbehandlung von Tieren mittels Tauchen, Begiessen oder Besprühen z.B. durch Benetzung der empfindlichen äusseren Sinnesorgane in Erscheinung treten können.

Die Verwendung der erfindungsgemässen Applikationsvorrichtung zur Bekämpfung von Ektoparasiten auf und im Haarkleid der Tiere stellt ebenfalls einen Aspekt der vorliegenden Erfindung dar.

Die vorliegende Erfindung wird durch folgende Beispiele illustriert, die jedoch Beschränkung des Erfindungsumfangs darstellen.

## 1. Herstellungsbeispiele

### 1.1 Herstellung der Beschichtungsmasse enthaltend Diazinon

In eine Petrischale ($\emptyset$ ca. 90 mm) werden 43,0 g Diazinon techn. (93,3 %) und 7,0 g Carnaubawachs eingewogen. Die Mischung wird auf 100° bis 110°C erwärmt und solange gerührt bis eine homogene braune Schmelze entstanden ist (Mischung M1).

### 1.2 Herstellung der Beschichtungsmasse enthaltend Jodfenphos

In eine Petrischale ($\emptyset$ ca 90 mm) werden 16,5 g Erdnussöl, 2,0 g Carnaubawachs und 31,5 g Jodfenphos eingewogen. Die Mischung wird auf 110° bis 120°C erwärmt und solange gerührt bis eine homogene braune Schmelze entstanden ist (Mischung M2).

Im Falle von Beschichtungsmassen mit auskristallisierenden Wirksubstanzen, z.B. Jodfenphos (Tabelle 1), kann der Belag (Beschichtung) infolge der Kristallbildung ein weissliches Aussehen bekommen, so dass auf einem Träger mit kräftiger Eigenfarbe (z.B. dunkelblauer Kamm) deutlich sichtbar ist und sein Abrieb sich mühelos optisch verfolgen lässt. Falls gewünscht kann die Beschichtung mit einem Farbstoff oder Pigment angefärbt werden, so dass während des Gebrauchs der Applikationsvorrichtung das Vorhandensein der wirksamen Beschichtung jederzeit kontrollierbar ist. Beim Verschwinden des Farbeffekts ist die insektizide oder akarizide Wirkung der Vorrichtung erschöpft. Geeignete Farbzusätze sind z.B.: Fettrot BB = Solvent Red 24 (C.I. 26 105); Sudan-Blau II = Solvent Blue 35 (C.I. 61 554); Irgalithgelb BAF u.v.a.

Analog den Beispielen 1.1 und 1.2 werden folgende Formulierungen hergestellt und dann zur Beschichtung verwendet: (Vgl. Tabellen 1 und 2):

Tabelle 1 (weisslich bis beige Beschichtung enthaltend Jodfenphos als Wirkstoff auf dunkelblauem Kunststoffkamm)

| Referenz-Nummer | M2 | | M3 | | M4 | | M5 | |
|---|---|---|---|---|---|---|---|---|
| Zusammensetzung | Gew.-% | g | Gew.-% | g | Gew.-% | g | Gew.-% | g |
| Jodfenphos | 63,0 | 31,5 | 63,0 | 31,5 | 70,0 | 35,0 | 63,0 | 31,5 |
| Erdnussöl | 33,0 | 16,5 | 33,0 | 16,5 | 26,0 | 13,0 | 33,0 | 16,5 |
| Carnaubawachs | 4,0 | 2,0 | | | | | 2,0 | 1,0 |
| Bienenwachs (gelb) | - | | | | 4,0 | 2,0 | | |
| Wachs (mikrokristallin) | - | | 4,0 | 2,0 | | | 2,0 | 1,0 |
| | 100,0 | 50,0 | 100,0 | 50,0 | 100,0 | 50,0 | 100,0 | 50,0 |
| Tropfpunkt* in °C | 67 | | 67 | | 66 | | 68 | |
| Härte** in Penetrometerzahl | 59 | | 128 | | 60 | | 103 | |

* der Tropfpunkt wird mit dem Gerät METTLER FP 53 bestimmt

** die Bestimmung der Härte erfolgt durch Nadelpenetration nach DIN 51579

**0 281 517**

Tabelle 2 (weisse Beschichtung mit Titandioxid als Farbzusatz und
Cypermetrin als Wirkstoff auf schwarzem Kunststoffstriegel)

| Referenz-Nummer | M6 | | M7 | | M8 | | M9 | | M10 | |
|---|---|---|---|---|---|---|---|---|---|---|
| Zusammensetzung | Gew.-% | g | Gew.-% | g | Gew.-% | g | Gew.-% | g | Gew.-% | g |
| Cypermethrin (high cis 78 %) | 80,0 | 40 | 60,0 | 30 | 89,0 | 44,5 | 94,0 | 47,0 | 85,4 | 42,7 |
| Carnaubawachs (PH Schuppen Pr.Nr. 2262) | 19,4 | 9,7 | 30,0 | 15 | 10,0 | 5 | 5,0 | 2,5 | 14,0 | 7 |
| Erdnussöl (Pr.Nr.6683) | | | 9,4 | 4,7 | | | | | | |
| Titandioxid Kronos RN57B® | 0,6 | 0,3 | 0,6 | 0,3 | 1,0 | 0,5 | 1,0 | 0,5 | 0,6 | 0,3 |
| | 100,0 | | 100,0 | | 100,0 | | 100,0 | | 100,0 | |
| Tropfpunkt* in °C | 82,5 | | 81 | | 81 | | 80 | | 82 | |
| Härte** in Penetro-meterzahl | 32 | | 24 | | 65 | | 150 | | 50 | |

\* der Tropfpunkt wird mit dem Gerät METTLER FP 53 bestimmt

\*\* die Bestimmung der Härte erfolgt durch Nadelpenetration nach
DIN 51579

7

Tabelle 3 (Angefärbte Beschichtungsmasse auf weissem Kunststoffträger)

| Referenz-Nummer | M11 | M12 | M13 | M14 |
|---|---|---|---|---|
| Zusammensetzung | Gew.-% | Gew.-% | Gew.-% | Gew.-% |
| Cypermethrin (high cis 78 %) | 94,0 | 86,0 | 86,0 | |
| Jodfenphos | | | | 63,0 |
| Carnaubawachs (PH Schuppen Pr. Nr. 2262) | 5,0 | 13,7 | 13,7 | 4,0 |
| Erdnussöl (Pr. Nr. 6683) | | | | 32,7 |
| Irgalithgelb[a] | 1,0 | | | |
| Solvent Red 24[b] | | 0,3 | | 0,3 |
| Solvent Blue 35[c] | | | 0,3 | |

a) C.I. Pigment Gelb 17

b) C.I. 26105

c) C.I. 61554

### 1.3. Beschichtung eines Applikators (Striegel)

Die fertige Beschichtungsmasse wird auf 90° bis 100°C bis zum Eintreten der Schmelze erwärmt. Anschiessend wird die homogene Schmelze auf eine Temperatur gebracht, die 10-20°C über dem Tropf-oder Erstarrungspunkt der Beschichtungsmasse liegt, und bei dieser Temperatur gehalten. Dann wird der Striegel mit den Zähnen nach unten 2 Sekunden lang so in die Schmelze gehalten, dass die Zähne 4-6 mm tief in die Schmelze eintauchen. Anschliessend wird der benetzte Striegel herausgezogen und nach dem Abtropfen der überschüssigen Beschichtungsmasse mehrere Sekunden in unveränderter Lage gehalten, bis die anhaftende Schicht erstarrt ist. Dann wird der beschichtete Striegel mit den Zähnen nach oben zum Abkühlen und Verfestigen der aufgezogenen Schmelzmasse ausgelegt.

Nach abgeschlossener Verfestigung ist ca. 1 g an Beschichtungsmasse auf den Zähnen des Striegels aufgezogen. Der beschichtete Teil der Zähne erhält dabei einen Ueberzug von ca. 0,5 mm Stärke.

### 1.4. Geeignete Applikatoren

1.4.1. Ein Beispiel eines Applikators ist ein aus Polyethylen nach dem Spritzguss-Verfahren in einem Stück hergestellter Striegel, der den handelsüblichen Massagebürsten entspricht. Er besitzt eine flache, scheibenartige Form mit rundem bis ovalem Umriss und einem mittleren Durchmesser von ca. 80 mm. Auf der einen Falchseite ist er mit einem kleinen Handgriff versehen. Auf der anderen Flachseite sind in gleichmässigen, über die ganze Fläche verteilten Abständen 127 senkrecht stehende runde Zähne angeordnet, die eine Einzellänge von 15 mm und einen mittleren Durchmesser von 1,3 mm haben.

1.4.2. Ein weiteres Beispiel eines Applikators ist ein gemäss 1.4.1. hergestellter Kamm z.B. aus Polyethylen, Polyamid oder anderen Kunststoffen, enthaltend ein Farbpigment, mit 25 bis 40 mm langen Zähnen mit einem Querschnitt von 1,5 bis 5 mm, die im Abstand von 2 bis 10 mm aneinandergereiht sind.

### 2. Biologische Beispiele

### 2.1 Wirkungstest gegen Siphonaptera (Flöhe)

0 281 517

Versuchstiere
Hunde verschiedener Rassen und Kreuzungen, u.a. Terrier, Pudel, Corgy.

Infestation und deren Kontrolle
Je 2 Tiere werden in Zwingern (Käfigen) gehalten, die stark mit Flöhen besetzt sind, wodurch eine laufende Selbstinfestation mit Flöhen gewährleistet ist. Der Flohbefall eines jeden Hundes wird beurteilt, indem während einer täglichen Inspektion die sichtbaren Flöhe gezählt werden. Falls dabei keine Flöhe gefunden werden, erfolgt eine nochmalige gründliche Untersuchung, um die Abwesenheit von Flöhen zu bestätigen.

Behandlung
Nach Feststellung, dass die Tiere eine ständige Flohpopulation aufrecht erhalten, wird eine Behandlung der infestierten Tiere durch Bestreichen ihres Fells mit einem beschichteten Striegel (Wirkstoff der Beschichtung s. Tabelle 4) durchgeführt. Dabei werden den Tieren die in der Tabelle 4 angegebene Anzahl Striegelstriche verabreicht, wobei die beschichteten Zähne des Striegels von der Schulter bis zum Schwanz durch das Rückenfell des Tieres gezogen werden. Die so behandelten Hunde werden dann in die Zwinger zurückgebracht und in Intervallen von 24 Stunden auf Flohbesatz, wie vorhergehend beschrieben, untersucht. Nach Verbrauch der Beschichtung auf dem Striegel, wird dieser durch einen neuen ersetzt.

9

Tabelle 4: Ergebnisse

| Beschichtung mit Wirkstoff | Anzahl Flöhe pro Hund vor der Behandlung | Applikation Anzahl Striegelstriche | Zeit bis Flohreduktion auf 0 in Stunden | flohfrei nach Behandlung Anzahl Tage |
|---|---|---|---|---|
| Cypermethrin | 5 | 20 | <24 | 20 |
| | 15 | 15 | <24 | 18 |
| | 16 | 10 | >24 | 6 |
| Diazinon | 7 | 20 | <24 | 20 |
| | 3 | 20 | <24 | 22 |
| | 25 | 10 | <24 | 10 |
| | 30 | 10 | <24 | 17 |
| Jodfenphos | 9 | 20 | <24 | 18 |
| | 4 | 20 | <24 | 20 |
| | 14 | 10 | <24 | 11 |
| | >30 | 10 | <24 | 11 |
| | >30 | 2 | <24 | 11 |
| | >30 | 2 | <24 | 13 |
| | 22 | 2 | <24 | 13 |
| | 25 | 2 | <24 | 13 |

0 281 517

**Patentansprüche**

1. Vorrichtung mit zahn-, borsten- oder noppenartigen Erhebungen zur Applikation eines ektoparasitiziden Wirkstoffs auf Haus- oder Nutztiere, dadurch gekennzeichnet, dass die Zähne, Borsten oder Noppen dieser Vorrichtung ganz oder teilweise mit einer den Wirkstoff enthaltenden Beschichtungsmasse beschichtet sind, die beim Kämmen, Bürsten oder Striegeln des Tieres auf dessen Haarkleid und Haut übertragen wird und die sich optisch deutlich vom Material der Zähen, Borsten oder Noppen unterscheidet.

2. Vorrichtung gemäss Anspruch 1, dadurch gekennzeichnet, dass das Material der Zähne, Borsten oder Noppen und die den Wirkstoff enthaltende Beschichtungsmasse unterscheidbare Farben aufweisen.

3. Vorrichtung gemäss Anspruch 2, dadurch gekennzeichnet, dass die den Wirkstoff enthaltende Beschichtungsmasse eine farbgebende Substanz enthält, die sich von der Eigenfarbe der Zähne, Borsten oder Noppen unterscheidet und ein Farbstoff oder ein Pigment ist.

4. Vorrichtung gemäss Anspruch 1, dadurch gekennzeichnet, dass die Beschichtungsmasse mindestens einen Wirkstoff aus der Gruppe der natürlichen Pyrethrine, Pyrethroide, Chlorkohlenwasserstoffe, Carbamate, Phosphorsäureester, Thiocyansäureester, Nitrophenolderivate, Isonitrile, Diamide, Amidine, Triazinderivate, Phenylhydrazonpyrrolidinderivate, Phenylimidazolinderivate oder Phenylbenzoylharnstoffe enthält.

5. Vorrichtung gemäss Anspruch 1, dadurch gekennzeichnet, dass die Beschichtungsmasse als Formulierungshilfsstoffe Wachse, wachsartige Substanzen, feste oder flüssige Fette, fettartige Substanzen oder Bindemittel enthält.

6. Vorrichtung gemäss Anspruch 4, dadurch gekennzeichnet, dass die Beschichtungsmasse mindestens einen Wirkstoff aus der Gruppe Cypermethrin, Diazinon und Jodfenphos enthält.

7. Vorrichtung gemäss Anspruch 5, dadurch gekennzeichnet, dass die Bschichtungsmasse als Formulierungshilfsstoff mikrokristallines Wachs, Carnaubawachs, Bienenwachs, Erdnussöl oder Gemische dieser Substanzen enthält.

8. Vorrichtung gemäss Anspruch 1, dadurch gekennzeichnet, dass der Gehalt an Wirkstoff in der Beschichtungsmasse 5 bis 98 Gew.% beträgt.

9. Vorrichtung gemäss Anspruch 8, dadurch gekennzeichnet, dass der Gehalt an Wirkstoff in der Beschichtungsmasse 50 bis 98 Gew.% beträgt.

10. Vorrichtung gemäss Anspruch 1, dadurch gekennzeichnet, dass der Tropfpunkt der Beschichtungsmasse bei 50° bis 120°C liegt.

11. Vorrichtung gemäss Anspruch 10, dadurch gekennzeichnet, dass der Tropfpunkt bei 60° bis 90°C liegt.

12. Vorrichtung gemäss Anspruch 1, bei welcher die verfestigte Beschichtungsmasse eine Penetrometerzahl von 15 bis 220 gemäss Nadelpenetration nach DIN 51579 besitzt.

13. Verwendung der Vorrichtung gemäss Anspruch 1 zur Bekämpfung von Ektoparasiten auf Haus- oder Nutztieren.

14. Verwendung gemäss Anspruch 13, dadurch gekennzeichnet, dass die Ektoparasiten Vertreter der Ordnungen Siphonaptera, Phthiraptera, Akarina sowie Diptera-Species sind.

15. Verwendung gemäss Anspruch 14, dadurch gekennzeichnet, dass die Ektoparasiten Flöhe, Läuse, Zecken, Milben oder Fliegen sind.

16. Verfahren zur Bekämpfung von Ektoparasiten, dadurch gekennzeichnet, dass die Vorrichtung gemäss Anspruch 1 zum Kämmen, Bürsten oder Striegeln des Haarkleides von Warmblütern eingesetzt wird.

17. Verfahren zur Herstellung einer Vorrichtung mit zahn-, borsten-oder noppenartigen Erhebungen zur Applikation eines ektoparasitiziden Wirkstoffs auf Haus- und Nutztiere, dadurch gekennzeichnet, dass man die unbeschichteten Erhebungen mit einer den Wirkstoff enthaltenden Masse beschichtet.